# EUROPEAN PATENT APPLICATION

(11) **EP 4 475 262 A1**
(43) Date of publication of application: **11.12.2024**
(21) Application number: 23305905.4
(22) Date of filing: 07.06.2023
(51) Int. Cl.: H01M 10/058, H01M 50/533

(54) **TAB SHAPE FOR A BATTERY ELECTRODE**

(71) Applicant: Automotive Cells Company SE, 33520 Bruges (FR)
(72) Inventor: CHOI, Hangjune, 33200 Bordeaux (FR); ORIGUCHI, Masato, 78120 Rambouillet (FR); AUTRET, Stéphane, 33520 Bruges (FR)
(74) Representative: Alatis

(57) **Abstract**

The present invention relates to a battery cell comprising several electrodes (10, 15), each electrode (10) comprising a foil with a plane surface and a flexible tab (20) which projects beyond a longitudinal edge (11) of the foil along a vertical direction (X) perpendicular to a longitudinal direction (Y). The flexible tab (20) comprises two parts, a first part (28) starting from the longitudinal edge (11) of the foil extended by an adjacent second part (29), said first part (28) having a rectangular shape with two longitudinal sides (22, 22') of the same size and said second part (29) having a trapezoidal shape with two longitudinal sides (24, 24') of different sizes.

## Description

### TECHNICAL FIELD OF THE INVENTION

The present invention concerns the technical field of electric batteries, in particular lithium-ion batteries which are used, among others, to power the traction chain of electric or hybrid vehicles.

More specifically, the invention relates to innovative electrode shapes which improve the manufacturability and the quality of a battery cell.

### BACKGROUND

Some Lithium-ion batteries comprise several battery cells, each battery cell having an electrode stack architecture comprising of a plurality of anodes (negative electrodes) and cathodes (positive electrodes), which are composed of foil and active material coating layers, stacked against each other and separated by a separation sheet (also known as a separator). Each cathode foil (also known as a current collector and made for instance with aluminium) is covered with a cathode active material coating layer and each anode foil is covered with an anode active material coating layer.

The electrodes (i.e. cathodes and anodes) are each extended with a connecting tab consisting of a small outgrowth of foil beyond the foil plan. These tabs are flexible and are used to electrically connect all the cathodes together (and all the anodes together respectively) to external terminals of the battery to transmit the electrical energy. These tabs are usually in a small rectangle geometry with rounded corners and they extend from the longitudinal straight edge of the electrodes. All the cathode tabs are positioned at a same precise position along the longitudinal edge of the cathode. Likewise, all the anode tabs are positioned at a precise position along the longitudinal edge of the anode.

During the manufacturing process of the battery cells, the electrodes are manufactured from long metallic strips which, after different operations, are cut to obtain each electrode sheet. During these operations, the electrode strip moves through numerous guide rolls which pass along the strip. Due to their flexibility, the tabs are often bent or tilted when passing under these guide rolls. But, when the tabs have a rectangular shape, the tabs' edges/corners have multiple chances of collision with the surface of the guide rolls with a high probability of getting "folded", instead of being merely bent during these collisions. Thus, this causes a "folded tab defect" which is a fatal failure that of course lowers the productivity of the manufacturing process. This "folding" can also occur with rectangle tabs having smaller rounded corners.

Document EP4123820A1 already discloses that electrode tabs can have a trapezoidal shape instead of a rectangular shape. However, for quality control issues, it is also necessary to quickly and precisely measure the longitudinal position of the tabs along the longitudinal edge of the electrodes following their assembly in an electrode stack. Such measurements are important for checking the correct positioning of all the electrodes in the stack, but they can be difficult to obtain when the electrode tabs have a trapezoidal shape.

Therefore, one purpose of the present invention is to provide an effective, reliable, economical and easy to implement solution that enhances manufacturability and productivity, while maintaining an efficient quality control of battery electrodes.

### DISCLOSURE OF THE INVENTION

In order to achieve the above purpose, the invention provides an electrode sheet for a battery cell, comprising a foil with a plane surface and a flexible tab which projects beyond a longitudinal edge of the foil along a transversal direction perpendicular to a longitudinal direction. That said flexible tab comprises two parts, a first part starting from the longitudinal edge of the foil extended by an adjacent second part, said first part having a rectangular shape with two longitudinal sides of the same size and said second part having a trapezoidal shape with two longitudinal sides of different sizes.

According to one embodiment, the second part of the tab comprises an inner longitudinal side adjacent to the first part of the tab and an outer longitudinal side, the outer side being smaller than the inner side.

According to one embodiment, the first part of the tab comprises two lateral sides which are perpendicular to the longitudinal edge of the electrode foil.

According to one embodiment, the second part of the tab comprises two lateral sides, both of them being not perpendicular to the longitudinal edge of the foil.

According to one embodiment, the second part of the tab comprises two lateral sides, one side being perpendicular to the longitudinal edge of the foil and the other side being not perpendicular to the longitudinal edge of the foil.

According to one embodiment, the second part of the tab comprises two outer rounded corners.

According to one embodiment, the lateral sides of the second part of the tab meets smoothly with their corresponding lateral sides of the first part of the tab with a filleting radius which is tangential to the lateral sides of the first part and to the lateral sides of the second part.

The invention also provides a battery cell comprising a plurality of such electrode sheets.

### BRIEF DESCRIPTION OF FIGURES

Further features and advantages of the present invention will become apparent from the following description, with reference to the annexed figures, wherein:
- Figure 1 shows a simplified existing implementation embodiment of an electrode stack;
- Figure 2 represents a schematic perspective view of an electrode strip during the manufacturing process, with an electrode tab according to the prior art;
- Figure 3a, 3b and 3c give three examples of shapes for an electrode tab, Figure 3a showing an example according to the prior art, Figure 3b and 3c showing two examples according to the present invention;
- Figure 4 details the position of a cathode tab according to the invention;
- Figure 5 repeats the view of Figure 2 but with an electrode tab according to the invention.

### DETAILED DESCRIPTION OF AN EMBODIMENT

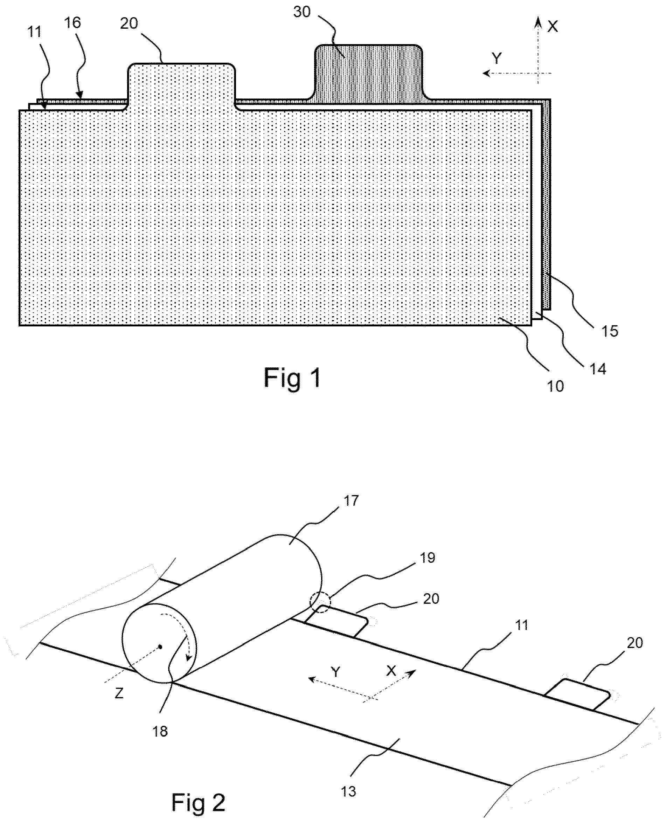

With reference to Figure 1, a lithium-ion battery cell comprises at least one cathode **10** in the form of a sheet, made of aluminium foil for example, coated on both sides by a cathode active material coating layer. The battery cell also comprises at least one anode **15** in the form of a sheet, made of copper foil for example, coated on both sides by an anode active material coating layer. The anode **15** and cathode **10** are placed against each other and are separated by a separator **14** which can be, for instance, a thin and porous plastic film. The anode **15** and cathode **10** are flat and have a roughly rectangular plane.

An electrode stack of a battery cell is usually composed of a stack of such electrode sheets and thus comprises a plurality of cathodes **10** and anodes **15** which are alternately arranged and separated by a plurality of separators **14.** In Figure 1, only one cathode **10** one anode **15** and one separator **14** are shown.

The cathode **10** has a longitudinal edge **11** along a longitudinal direction **Y** and comprises a flexible tab **20** which projects beyond the longitudinal edge **11** along a transversal direction **X,** which is parallel to the cathode foil plan and perpendicular to the longitudinal direction **Y**. This cathode tab **20** is only present on one section of the longitudinal edge **11** of the cathode **10** and is, for instance, 30-50 mm wide and around 20-30 mm high.

Similarly, the anode **15** has a longitudinal edge **16** along the longitudinal direction **Y** and comprises a flexible tab **30,** which projects beyond the longitudinal edge **16** along the transversal direction **X.** This anode tab **30** is only present on one section of the longitudinal edge **16** of the anode **15** and has approximately the same dimensions as the cathode tab **20.**

The anode tab **30** is offset from the cathode tab **20** along the direction **Y** to avoid any contact between them in the electrode stack of the battery cell, when tabs are tilted for instance. These tabs **20** (and **30** respectively) are used to electrically connect together the electrodes **10** (and **15** respectively) to external terminals of the battery in order to transmit the electrical energy the battery cell. To facilitate these connections, the tabs **20** and **30** must be flexible.

The electrodes (anodes **15** and cathodes **10**) are generally manufactured starting from long electrode strips **13** having flexible tabs arranged at regular intervals. This electrode strip **13** undergoes different manufacturing operations, prior to being cut along the transversal direction **X** to obtain several electrodes of the correct dimensions. As shown in Figure 2, during these operations the electrode strip **13** moves along the direction **Y** through a path comprising many tens of guide rolls **17** which are in a rotating movement **18** according to an axis **Z,** parallel to the transversal direction **X** and perpendicular to the longitudinal direction **Y**.

When tab **20** has a rectangular shape, even with rounded corners, there is a risk that, at a contact point **19** between the tab **20** and the guide roll **17,** the tab **20** is not just tilted but can be folded backwards during the movement of strip **13.** This causes a major defect and of course reduces the productivity of the manufacturing process.

According to the present invention, a trapezoidal geometry of the tab **20** can significantly lower the probability of the tab being folded backwards during contact between the tab **20** edge/corner and the guide roll **17** surface. Such trapezoidal geometry provides higher folding resistance compared with a rectangle geometry, even with a same level of collision impact between the tab **20** and the guide roll **17.** The inclined side of the trapezoid facilitates the smooth guiding of the tab **20** by enabling gradual contact between the tab edge and the guide roll **17** surface.

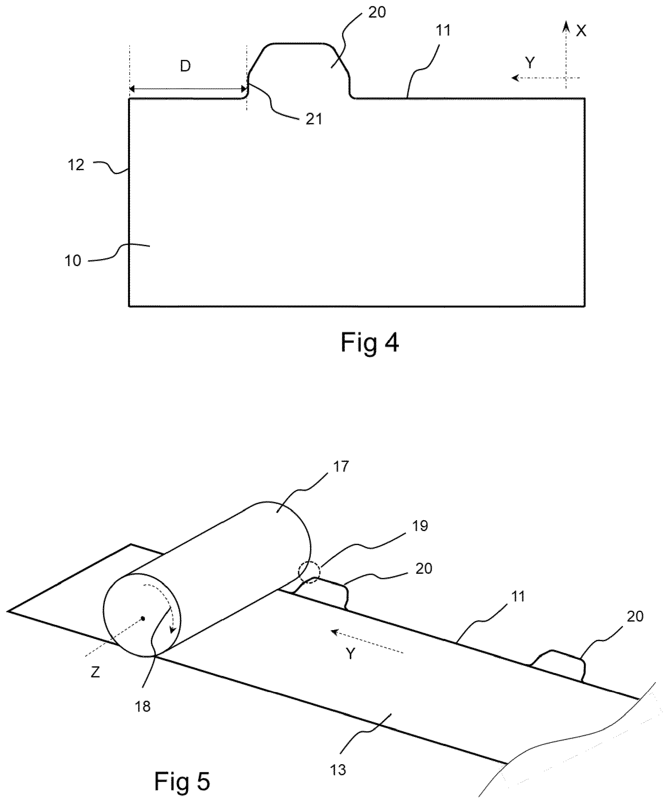

Furthermore, once the cathodes **10** (and respectively the anodes **15**) are placed in an electrode stack, the cathode tabs **20** (and respectively the anode tabs **30**) must be well aligned with each other, prior to getting assembled and welded for electrical connection of the battery cell. To verify this alignment, as shown in the example of Figure 4 for a cathode **10,** the battery control quality process needs to precisely measure the position of each cathode tab **20** along the longitudinal edge **11** of the cathode **10.** That is to say, measuring the distance **D** between a lateral side **21** of the cathode tab **20** and a transversal side **12** of the cathode **10.** Said transversal side **12** of the cathode **10** is parallel to the transversal direction **X** and perpendicular to the longitudinal edge **11** of the cathode **10.** For instance, an optical measurement system is often applied to inspect this distance **D.** On identifying several points on the edges **11, 20,** and **21,** some coordinate transformation calculations follow to get the distance **D** in precision at a very high speed. The distance **D** is, for instance, about 60 mm for the cathode tab **20.**

However, if the lateral side **21** of the cathode tab **20** is not parallel to the transversal side **12** of the cathode **10,** meaning that the angle between the longitudinal edge **11** and the lateral side **21** is not a right angle, then an accurate and reliable measure of the distance **D** will be very difficult to obtain. Distance **D** can vary depending, for instance, on the vertical position of the cathode **10,** especially with rounded corners at the intersection between the cathode **10** and the cathode tab **20.** A trapezoidal shape of the cathode tab **20,** instead of a rectangular shape, would surely induce problems in measuring the distance **D,** and thus make the battery control quality less reliable.

Therefore, the present invention proposes a new shape for electrodes tabs which will achieve the two objectives of improving the manufacturability and productivity while maintaining a high-quality control.

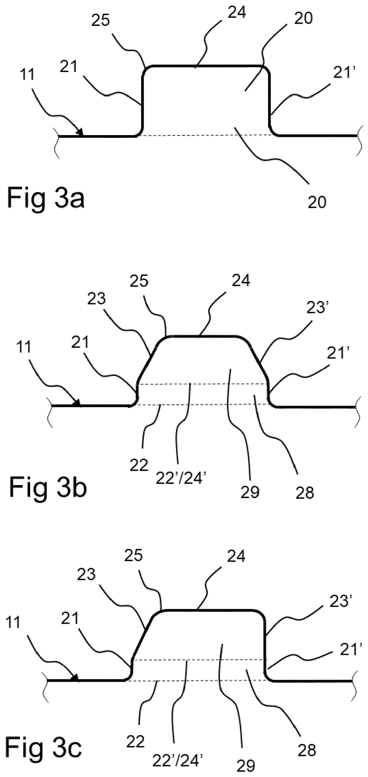

The three Figures 3a, 3b and 3c show three examples of shapes for electrode tabs. Figure 3a shows an existing tab **20** having a classical rectangular shape. It comprises two straight parallel lateral sides **21, 21',** which are parallel to the transversal direction X and perpendicular to the longitudinal edge **11** of the tab **20,** and one longitudinal side **24,** parallel to the longitudinal edge **11.** The rounded corners **25** between lateral sides **21, 21'** and the longitudinal side **24** are rounded with a radius for instance equal to 2 mm or even 0 mm for an easier manufacturing process, which may cause higher possibility of the "folded tab defect".

Figure 3b discloses a first embodiment of the invention. The flexible tab **20** comprises two parts, a first part **28** starting from the longitudinal edge **11** of the electrode **10** extended by an adjacent second part **29.** The first part **28** has a rectangular shape with two lateral sides **21, 21'** parallel to the transversal direction X and perpendicular to the longitudinal edge **11,** between two longitudinal sides **22, 22'** parallel to the longitudinal edge **11.** These longitudinal sides **22, 22'** have the same size (not taking into account the rounded corners). The two lateral sides **21, 21'** of the rectangle shape part **28** have for instance a length of 5 mm.

The second part **29** of the tab **20** has a trapezoidal shape with two lateral sides **23, 23'** which are inclined from the transversal direction **X** and not perpendicular to the longitudinal edge **11,** between two longitudinal sides **24, 24',** an inner longitudinal side **24'** adjacent to the first part **28** of the tab **20** and an outer longitudinal side **24,** which are parallel to the longitudinal edge **11.** The two longitudinal sides **24, 24'** have different sizes : the outer longitudinal side **24** of the tab **20** is smaller than the inner longitudinal side **24'.** The sides **22'** and **24'** are merged. As the lateral sides **23, 23'** are inclined, they come more softly into contact with a guide roll **17** during the movement of the strip **13,** avoiding any backwards folding of the tab **20.** Moreover, the outer round corners **25,** between each lateral side **23, 23'** and the outer longitudinal side **24,** have a radius for instance equal to 10 mm, which is larger than the radius of the round corner **25** of Figure 3a. These outer round corners **25** also help the whole tab **20** enter into contact with a guided roll **17** more smoothly at contact point **19.**

Preferably, the lateral side **23** (respectively **23'**) of the second part **29** of the tab **20** meets smoothly with its corresponding lateral side **21** (respectively **21'**) of the first part **28** of the tab **20,** with a round corner between the lateral side **23** (respectively **23'**) of the second part **29** and its corresponding lateral side **21** (respectively **21'**) of the first part **28.**

Figure 3c discloses an alternative embodiment of the invention. In this embodiment, the flexible tab **20** also comprises two parts, a first part **28** starting from the longitudinal edge **11** of the electrode **10** extended by an adjacent second part **29.** The first part **28** has a rectangular shape and is similar to the one described above in Figure 3b. The second part **29** is different from the one of Figure 3b. The second part **29** still has a trapezoidal shape with two lateral sides **23, 23',** between two longitudinal sides **24, 24'** parallel to the longitudinal edge **11,** having different sizes. However, only one lateral side **23** is inclined and not perpendicular to the longitudinal edge **11,** while the other lateral side **23'** is perpendicular to the longitudinal edge **11,** and thus parallel to the lateral side **21'.** The outer longitudinal side **24** of the tab **20** is smaller than the inner longitudinal side **24'.** Similar to Figure 3b, the sides **22'** and **24'** are merged. The outer round corner **25,** between the inclined lateral side **23** and the outer longitudinal side **24,** has a radius for instance equal to 10 mm.

The alternative embodiment of Figure 3c is suitable if, during the electrode manufacturing process, the strip **13** always moves in the same longitudinal direction **Y** and always comes in contact with a guide roll **17** on the same side **23** of all the tabs **20** of the strip **13.** In this case, the other lateral side **23'** of the second part **29** of any tab **20** does not need to be inclined from the transversal direction **X.**

In addition, a tab shape comprising a second trapezoidal part **29** combined with a first rectangular part **28** also gives additional benefits. For instance, the first rectangular part **28** of the tab **20** provides a slightly higher stiffness and a better electrical current carrying capacity (electrical conductivity) than a complete trapezoidal tab shape.

The scope of the present disclosure is not limited thereto, and other modifications and embodiments can be devised by those skilled in the art, without deviating from the spirit and scope of the invention described in the appended claims.

## Claims

1. Electrode sheet for a battery cell, comprising a foil with a plane surface and a flexible tab (20) which projects beyond a longitudinal edge (11) of the foil along a transversal direction (X) perpendicular to a longitudinal direction (Y), **characterized in that** said flexible tab (20) comprises two parts, a first part (28) starting from the longitudinal edge (11) of the foil extended by an adjacent second part (29), said first part (28) having a rectangular shape with two longitudinal sides (22, 22') of the same size and said second part (29) having a trapezoidal shape with two longitudinal sides (24, 24') of different sizes.

2. Electrode sheet according to claim 1, wherein the second part (29) of the tab (20) comprises an inner longitudinal side (24') adjacent to the first part (28) of the tab (20) and an outer longitudinal side (24), the outer side (24) being smaller than the inner side (24').

3. Electrode sheet according to claim 1, wherein the first part (28) of the tab (20) comprises two lateral sides (21, 21') which are perpendicular to the longitudinal edge (11) of the electrode foil.

4. Electrode sheet according to claim 3, wherein the second part (29) of the tab (20) comprises two lateral sides (23, 23'), both of them being not perpendicular to the longitudinal edge (11) of the foil.

5. Electrode sheet according to claim 3, wherein the second part (29) of the tab (20) comprises two lateral sides (23, 23'), one side (23') being perpendicular to the longitudinal edge (11) of the foil and the other side (23) being not perpendicular to the longitudinal edge (11) of the foil.

6. Electrode sheet according to claim 1, wherein the second part (29) of the tab (20) comprises two outer rounded corners (25).

7. Electrode sheet according to claim 4 or 5, wherein the lateral side (23, 23') of the second part (29) of the tab (20) meets smoothly with the corresponding lateral side (21, 21') of the first part (28) of the tab (20), with a round corner between the lateral side (23, 23') of the second part 29 and the corresponding lateral side (21, 21') of the first part 28.

8. Battery cell comprising a plurality of electrode sheets (10, 15), each electrode sheet being in accordance with one of the preceding claims.
